# EUROPÄISCHE PATENTANMELDUNG

(11) **EP 1 686 489 A1**
(43) Veröffentlichungstag der Anmeldung: **02.08.2006**
(21) Anmeldenummer: 05001798.7
(22) Anmeldetag: 28.01.2005
(51) Int. Cl.: G06F 17/21, G06F 17/22

(54) **Verfahren und System zur Verarbeitung von Dokumenten, deren Struktur durch ein Schema beschreibbar ist**

(71) Anmelder: SIEMENS AKTIENGESELLSCHAFT, 80333 München (DE)
(72) Erfinder: Kulzer, Heinrich, 90475 Nürnberg (DE); Macher, Andreas, 92318 Neumarkt (DE); Merkl, Thomas, 95478 Kemnath (DE)

(57) **Zusammenfassung**

Die Erfindung betrifft ein Verfahren und ein System zur Verarbeitung von Dokumenten, deren Struktur durch ein Schema beschreibbar ist. Darüber hinaus betrifft die Erfindung ein Computerprogramm zur Verarbeitung solcher Dokumente. Um eine einfache Prüfung mittels Schema auch bei erweiterten Dokumenten zu ermöglichen wird ein Verfahren vorgeschlagen, welches ein Transformieren (9) eines in einer erweiterten Struktur vorliegenden Ausgangsdokuments (5) in ein Zieldokument (6) in einer nicht-erweiterten Struktur und ein Prüfen (10) des Zieldokuments (6) mittels eines die nicht-erweiterte Struktur beschreibenden Schemas (7) vorsieht.

## Beschreibung

Die Erfindung betrifft ein Verfahren und ein System zur Verarbeitung von Dokumenten, deren Struktur durch ein Schema beschreibbar ist. Darüber hinaus betrifft die Erfindung ein Computerprogramm zur Verarbeitung solcher Dokumente.

Die Struktur eines Extensible Markup Language (XML)-Dokuments ist mit standardisierten Mitteln, beispielsweise mit Hilfe eines XML-Schemas beschreibbar. Ein XML-Schema ermöglicht dabei die formale Festlegung der Struktur einer bestimmten Klasse von Dokumenten. Dabei kann festgelegt werden, welche Elemente und Attribute erlaubt sind und in welcher Anordnung die Elemente auftreten dürfen. Zugleich können die Datentypen definiert werden, die den Inhalt der Elemente und die Werte der Attribute einschränken.

Die Beschreibung mittels eines Schemas ermöglicht eine automatisierte Prüfung eines XML-Dokuments mittels eines Standard-XML-Parsers und eines zum XML-Dokument zugeordneten XML-Schemas, eine so genannte Schema-Validierung. Wird einer Anwendung ein XML-Dokument zur Verfügung gestellt, welches eine solche Prüfung bestanden hat, kann die Anwendung davon ausgehen, dass das XML-Dokument verarbeitet werden kann. Eine Strukturprüfung innerhalb der Anwendung muss nicht mehr durchgeführt werden.

Erfolgt im Zuge einer technischen Weiterentwicklung eine Erweiterung der XML-Struktur, so ist zur Prüfung der Dokumentenstruktur von XML-Dokumenten ein neues XML-Schema erforderlich. Eine Prüfung des erweiterten XML-Dokuments mit einer älteren Schemaversion würde zu Fehlern führen. Eine Anwendung kann also ein erweitertes XML-Dokument nur dann verarbeiten, wenn es möglich ist, die aktualisierte Schemaversion anzuwenden. Dies ist nicht in allen Fällen möglich, da die Schemadatei getrennt von den XML-Dateien bereitgestellt wird.

Ist eine Überprüfung mittels XML-Schema nicht möglich, müssen sämtliche Überprüfungen, die durch die Schema-Validierung durchgeführt werden würden, eigenständig programmiert und im Rahmen einer aufwendigen Sonderprüfung erfolgen. Neben einem damit verbundenen erhöhten Programmieraufwand ist auch eine damit verbundene mögliche Fehlerhäufung von Nachteil. Alternativ dazu ist es möglich, das erweiterte XML-Dokument ohne eine Prüfung an die Anwendung weiterzugeben, die Erweiterungen also vollständig zu ignorieren. Eine ordnungsgemäße Verarbeitung ist dann jedoch überhaupt nicht mehr sichergestellt.

Eine Aufgabe der vorliegenden Erfindung ist es, eine einfache Prüfung mittels Schema auch bei erweiterten Dokumenten zu ermöglichen.

Diese Aufgabe wird durch ein Verfahren nach Anspruch 1 beziehungsweise ein System nach Anspruch 8 beziehungsweise ein Computerprogramm nach Anspruch 9 gelöst. Danach ist zur Verarbeitung von Dokumenten, deren Struktur durch ein Schema beschreibbar ist, zunächst ein Transformieren eines in einer erweiterten Struktur vorliegenden Ausgangsdokuments in ein Zieldokument in einer nicht-erweiterten Struktur erforderlich. Im Anschluss daran kann dieses Zieldokument mittels eines die nicht-erweiterte Struktur beschreibenden Schemas geprüft werden.

Ein Kerngedanke der vorliegenden Erfindung besteht darin, die Prüfbarkeit von erweiterten Dokumenten mittels Schema auch dann sicherzustellen, wenn ein die erweiterte Struktur beschreibendes Schema nicht zur Verfügung steht. Dies wird dadurch erreicht, dass vor dem Interpretieren eines XML-Dokuments in der Anwendung eine Transformation der Daten in die ursprüngliche, also der Anwendung bekannte Struktur durchgeführt wird. Die Transformation selbst kann dabei mit Standardmitteln durchgeführt werden, so dass hierfür kein wesentlicher Programmieraufwand entsteht. Das Prüfen des Zieldokuments erfolgt wie üblich mit dem der Anwendung bekannten Schema. Mit der Erfindung ist somit eine Aufwärts- und Abwärtskompatibilität der zu verarbeitenden Dokumente sichergestellt.

Vorteilhafte Ausführungsformen der Erfindung sind in den Unteransprüchen angegeben.

Besonders vorteilhaft ist es danach, wenn das Transformieren ein Herausfiltern der Strukturerweiterungen aus dem Ausgangsdokument umfasst. Mit anderen Worten werden bei der Transformation die Erweiterungen der Datenstruktur nicht übernommen. Dadurch kann zwar das Zieldokument nicht hinsichtlich der Strukturerweiterungen geprüft werden. Jedoch ist die Verarbeitungsfähigkeit nach erfolgter Prüfung sichergestellt.

Insbesondere handelt es sich bei den Dokumenten um XML-Dokumente, deren Struktur durch XML-Schemata beschreibbar sind. Das Transformieren erfolgt somit vorzugsweise mittels einer Transformationsanweisung unter Verwendung von Extensible Style Sheet Language (XSLT). Ein XSLT-Prozessor dient dabei der Verarbeitung der XML-Dokumente im Rahmen der XSLT-Transformation. Vorzugsweise wird jeder Schemaversion eine Transformationsanweisung zugeordnet derart, dass bei jedem Auftreten einer erweiterten Struktur eine entsprechende Transformation in ein Zieldokument durchgeführt werden kann.

Ein weiterer Grundgedanke der Erfindung besteht darin, den Objekten des Ausgangsdokuments eine Kennzeichnung des für eine bedeutungsgerechte Verarbeitung erforderlichen Schemas zuzuordnen. Damit wird gewährleistet, dass die Anwendung korrekt mit den erweiterten Daten umgeht. Inkonsistente Datenbestände, die sich im Stand der Technik dadurch ergeben, dass eine Anwendung nur im Hinblick auf die ursprünglichen Daten programmiert ist, jedoch eventuelle Abhängigkeiten zwischen erweiterten und ursprünglichen Daten nicht berücksichtigt, wird somit effektiv vermieden. Mit anderen Worten erfolgt bei der Erstellung eines XML-Dokuments zu jedem Objekt dieses Dokuments die Definition einer Kennzeichnung dahingehend, welche Schemaversion eine Anwendung zumindest unterstützen muss, damit die Daten dieses Objekts bedeutungsgerecht bearbeitet werden können. Diese Metainformation wird beim Objekt im XML-Dokument abgelegt. Sind beispielsweise Daten in einer neueren Version eines XML-Dokuments enthalten, die sich nur auf eine Anzeige des Objekts auswirken, so kann dieses Objekt trotzdem fehlerfrei mit einer Anwendung verarbeitet werden, die ausschließlich im Hinblick auf eine ältere Schemaversion programmiert ist. Vorzugsweise wird bei dem Transformieren die Kennzeichnung beibehalten. Mit anderen Worten wird die Versionskennung in das Zieldokument übernommen. Eine Anwendung kann nun entscheiden, ob dieses Objekt verarbeitet werden kann oder nicht.

Die Erfindung ist auf beliebige Dokumente anwendbar, deren Struktur durch ein Schema beschreibbar ist. Vorzugsweise erfolgt die Anwendung der Erfindung jedoch auf XML-Dateien.

Die Erfindung wird nachfolgend anhand von Ausführungsbeispielen näher beschrieben, die mit Hilfe der Figuren erläutert werden. Hierbei zeigen:
- FIG 1: eine schematische Darstellung der Erfindung für XML-Dokumente,
- FIG 2: eine schematische Darstellung der Anwendung eines die nicht-erweiterte Struktur beschreibenden Schemas auf ein erweitertes Dokument,
- FIG 3: die Anwendung einer Transformationsanweisung auf ein erweitertes Dokument,
- FIG 4: die Anwendung eines die nicht-erweiterte Struktur eines Dokuments beschreibenden Schemas auf ein nicht-erweitertes Dokument, und
- FIG 5: die Anwendung einer Transformationsanweisung auf ein erweitertes Dokument mit Kennzeichnung der Schemaversion.

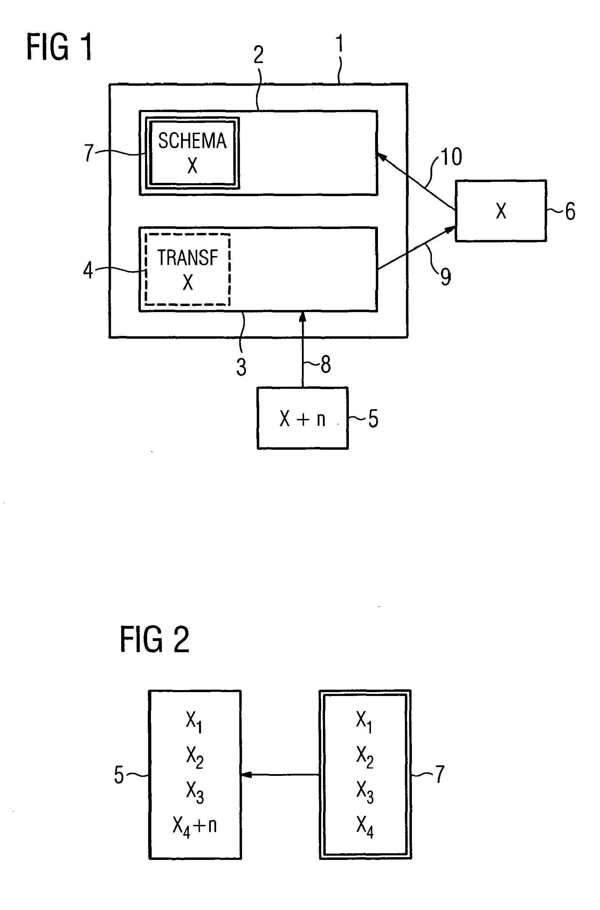

In FIG 1 ist schematisch eine Anwendung 1 mit Standard-XML-Parser 2 und XSLT-Prozessor 3 dargestellt. Durch Anwendung einer Transformationsanweisung 4 der Version X auf ein in einem ersten Schritt 8 in den XSLT-Prozessor 3 geladenes XML-Dokument 5 der Version X+n entsteht in einem Folgeschritt 9 ein neues XML-Dokument 6 der Version X. Dieses XML-Dokument 6 wird in einem nächsten Schritt 10 mit einem XML-Schema 7 der Version X durch den XML-Parser 2 validiert.

Die Transformationsanweisung 4 (XSLT-Datei) wird vom Ersteller einer Schemaversion bereitgestellt und lässt nur den durch das Schema festgelegten Wortschatz zu. Zu jeder veröffentlichten Schemaversion X muss genau eine Transformationsanweisung 4 der Version X bereitgestellt werden.

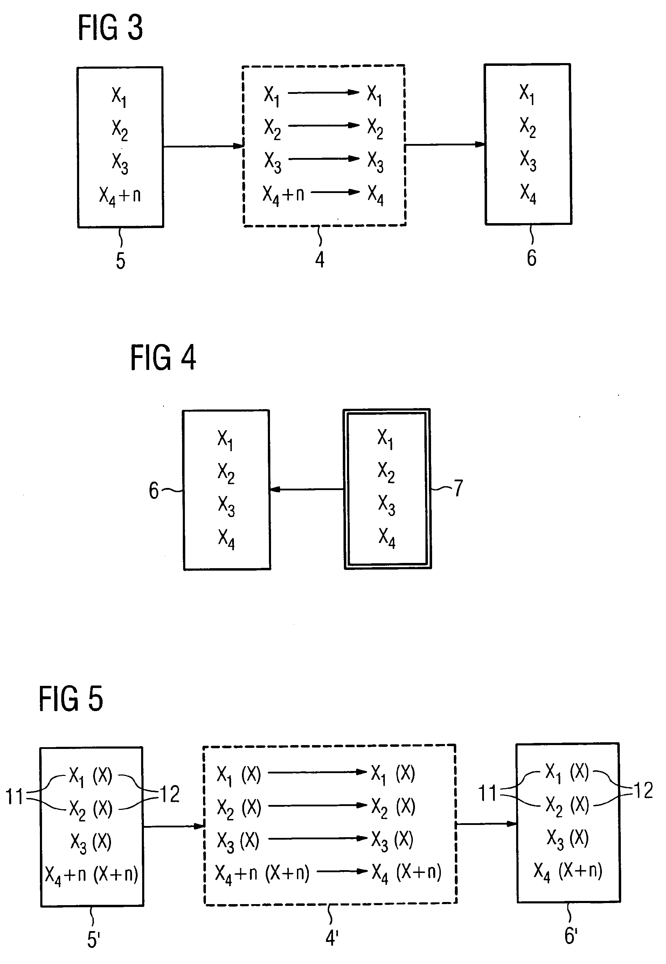

Bei der Transformation werden aus dem XML-Dokument 5 sämtliche Elemente und Attribute, die in der entsprechenden Schemaversion definiert wurden, in das Zieldokument 6 übertragen. Erweiterungen im XML-Dokument 5 werden dabei nicht in das Zieldokument 6 übernommen, da diese in der Transformationsanweisung 4 nicht berücksichtigt sind. Nach erfolgter Transformation kann die Anwendung 1 mit dem Zieldokument 6 eine Überprüfung mit Hilfe des ursprünglichen Schemas 7 durchführen, da sämtliche Erweiterungen ausgefiltert wurden. Damit wird eine eigenständige (zusätzliche) Prüfung des XML-Dokuments (im Anschluss an die automatische Schema-Validierung) in der Anwendung 1 auf die Teile reduziert, die durch ein Schema selbst nicht beschrieben sind.
Das Problem einer unvollständigen oder fehlerhaften Schema-Validierung, wie es bei Anwendung des Schemas 7 der Version X auf ein erweitertes Dokument 5 der Fall sein würde, vgl. FIG 2, wird mit anderen Worten dadurch vermieden, dass mit Hilfe einer Transformationsanweisung 4 sämtliche Erweiterungen ausgefiltert werden, vgl. FIG 3. Bei der anschließenden Schema-Validierung kann das Schema 7 der Version X problemlos auf das Zieldokument 6 angewandt werden, vgl. FIG 4.

Als besonders vorteilhaft hat es sich erwiesen, die Erfindung bei Gerätebeschreibungen von Automatisierungsgeräten anzuwenden. Hier werden die einzelnen Bestandteile eines Automatisierungsgeräts, beziehungsweise dessen Baugruppen, als Objekte in einem XML-Dokument beschrieben. Zu den jeweiligen Versionen der Gerätebeschreibungsdatei existiert ein passendes Engineeringtool, das aus den Objektdaten die für das Automatisierungssystem notwendigen Runtime-Daten erstellt. Durch Weiterentwicklung des Gerätebeschreibungs-Schemas ist es nun möglich, Funktionserweiterungen der Geräte mit zu beschreiben. In den meisten Fällen wird es aber möglich sein, ein Automatisierungsgerät auch mit einer älteren Beschreibungsdatei korrekt zu parametrieren. Folgendes Beispiel aus diesem Kontext zeigt eine mögliche Schemaerweiterung:
<Objekt ID="1" NotwendigeSchemaVersion="X">
   <Parameter Name="P1" Value="12"/>
   <Parameter Name="P2" Value="13"/>
   <Parameter Name="P3" Value="14"/>
</Objekt>

In diesem Beispiel der Version X eines Schemas werden die Parameter eines Objekts aufgelistet. In einer neueren Version des Schemas ist es nun möglich, die Parameter zu gruppieren, um eine übersichtlicherer Darstellung der Bedienoberfläche zu ermöglichen. Da sich diese Erweiterung nicht auf die Daten des Objekts auswirkt, ist einer Verarbeitung mit einer Anwendung, die das Schema der Version X interpretieren kann, möglich. Entsprechend der neuen Schemaversion hat das Objekt nun folgende Form:
<Objekt ID="1" NotwendigeSchemaVersion="X">
   <Parameter Name="P1" Value="12" Kategorie="Standard"/>
   <Parameter Name="P2" Value="13" Kategorie="Standard"/>
   <Parameter Name="P3" Value="14" Kategorie="Erweitert"/>
</Objekt>

Nach Anwendung einer entsprechenden Transformationsanweisung werden die erweiterten Attribute "Kategorie" entfernt. Im Ergebnis der Transformation liegt wieder das ursprüngliche Objekt in folgender Form vor:
<Objekt ID="1" NotwendigeSchemaVersion="X">
   <Parameter Name="P1" Value="12"/>
   <Parameter Name="P2" Value="13"/>
   <Parameter Name="P3" Value="14"/>
</Objekt>

Erfolgt ein Ablegen der Versionskennung 12 zu jedem Objekt 11 im XML-Dokument, so wie dies beispielhaft in FIG 5 anhand eines weiteren Ausführungsbeispiels dargestellt ist, kann die Anwendung 1 entscheiden, ob ein Objekt 11 verarbeitet werden kann oder nicht, sofern bei der Anwendung der Transformation die Versionskennung 12 in das Zieldokument 6 übernommen wurde.

## Patentansprüche

1. Verfahren zur Verarbeitung von Dokumenten, deren Struktur durch ein Schema beschreibbar ist, mit den Schritten
- Transformieren (9) eines in einer erweiterten Struktur vorliegenden Ausgangsdokuments (5) in ein Zieldokument (6) in einer nicht-erweiterten Struktur und
- Prüfen (10) des Zieldokuments (6) mittels eines die nicht-erweiterte Struktur beschreibenden Schemas (7).

2. Verfahren nach Anspruch 1, **dadurch gekennzeichnet, dass** das Transformieren (9) ein Herausfiltern der Strukturerweiterungen aus dem Ausgangsdokument (5) umfasst.

3. Verfahren nach Anspruch 1 oder 2, **dadurch gekennzeichnet, dass** den Objekten (11) des Ausgangsdokuments (5) eine Kennzeichnung (12) des für eine bedeutungsgerechte Verarbeitung erforderlichen Schemas zugeordnet ist.

4. Verfahren nach Anspruch 3, **dadurch gekennzeichnet, dass** die Kennzeichnung (12) bei dem Transformieren (9) beibehalten wird.

5. Verfahren nach einem der Ansprüche 1 bis 4, **dadurch gekennzeichnet, dass** es sich bei den Dokumenten (5, 6) um XML-Dokumente handelt.

6. System (1) zur Verarbeitung von Dokumenten, deren Struktur durch ein Schema beschreibbar ist, mit einer ersten Komponente (3) zum Transformieren (9) eines in einer erweiterten Struktur vorliegenden Ausgangsdokuments (5) in ein Zieldokument (6) in einer nicht-erweiterten Struktur und mit einer zweiten Komponente (2) zum Prüfen des Zieldokuments (6) mittels eines die nicht-erweiterte Struktur beschreibenden Schemas (7).

7. Computerprogramm zur Verarbeitung von Dokumenten, deren Struktur durch ein Schema beschreibbar ist, mit Computerprogrammbefehlen zum Transformieren (9) eines in einer erweiterten Struktur vorliegenden Ausgangsdokuments (5) in ein Zieldokument (6) in einer nicht-erweiterten Struktur und mit Computerprogrammbefehlen zum Prüfen des Zieldokuments (6) mittels eines die nicht-erweiterte Struktur beschreibenden Schemas (7), wenn das Computerprogramm auf einem Rechner ausgeführt wird.
